# EUROPEAN PATENT APPLICATION

(11) **EP 2 631 726 A1**
(43) Date of publication of application: **28.08.2013**
(21) Application number: 12185168.7
(22) Date of filing: 20.09.2012
(51) Int. Cl.: G05B 23/02

(54) **A method and apparatus for determining when an event occured in an industrial plant**

(30) Priority: 23.02.2012 US 201213403195
(71) Applicant: Yokogawa Electric Corporation, Tokyo 180-8750 (JP)
(72) Inventor: Himono, Ryoichi, Singapore (SG)
(74) Representative: Henkel, Breuer & Partner

(57) **Abstract**

A method of determining when an event occurred in an industrial plant, the event being defined by a number of variables simultaneously meeting their respective event-specific conditions, each of the number of variables having a plurality of data entries, each data entry comprising a value of the each of the number of variables and a time at which the value was obtained from the industrial plant, the method comprising a user creating an event definition on a client machine by defining the respective event-specific conditions for the number of variables; an executable application module in the server tagging with a user-assigned event label those of the plurality of data entries in which the number of variables simultaneously met their respective event-specific conditions; and the executable application module further creating an event occurrence list containing times corresponding to those of the plurality of data entries that have been tagged.

## Description

### Field of the Invention

The invention relates to a method of determining when an event occurred in an industrial plant and particularly, though not exclusively, relates to the determining using historical data.

### Background

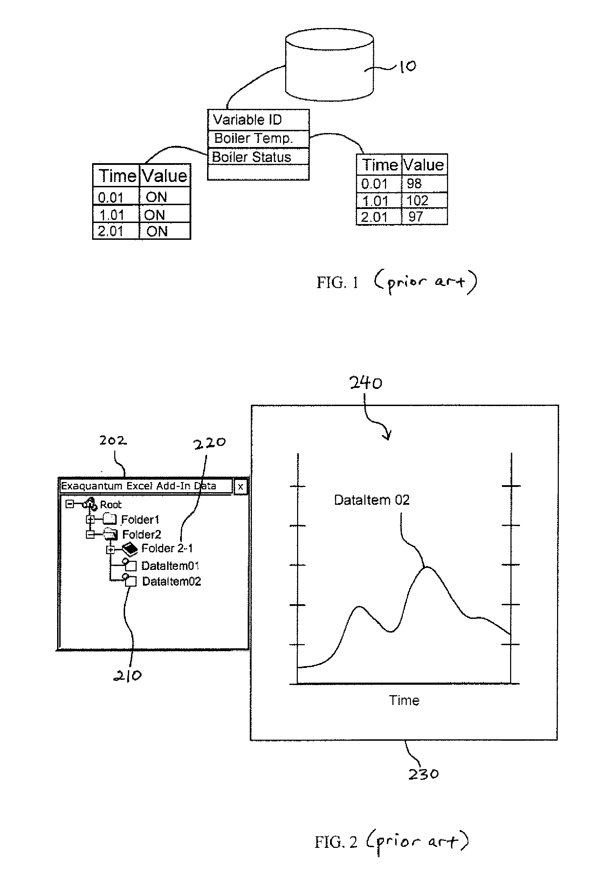

In the operation of an industrial plant, data is routinely obtained from the industrial plant and stored in a data historian for subsequent analyses of how the plant performed during operation. Such data typically comprises values of many plant operating variables that fluctuate or change with time. For example, the variables may comprise operating parameters such as temperature, flow rate or pressure; operating states such as a piece of equipment being on or off; the status of an alarm being triggered or not; and so on. Related variables such as those obtained from monitoring a specific aspect of the operations are typically grouped together in a data list. Each data list thus typically contains data for a plurality of variables. For each variable, the data normally comprises a plurality of data entries. One data entry normally comprises a value of the variable and the time at which that value was obtained from the plant. The plurality of data entries thus comprises a set of values for the variable obtained at various times during operation, and is stored in the data historian. FIG. 1 shows a schematic of data stored in the data historian 10.

Currently, it is possible to view the stored data of a variable in the form of a trend chart on a display screen. A trend chart typically comprises a graph of values of the variable over time. To view the trend chart, a typical data browser 202 as shown in FIG. 2 allows an icon 210 representing a variable shown in a list of items in a folder 220 to be dragged by a user using an input device such as a mouse pointer to a trend display 230 for visual representing as a graph 240. As the values for any variable are obtained at various times, the user needs to specify a time period within which the values obtained in that time period would be displayed as the graph 240.

A problem with existing data browsers is that it is only possible to determine when an event occurred by the user searching through past data in the data historian using trial-and-error specification of the time period in order to chronologically examine the values obtained. Normally, an event is determined to have occurred when one or more specific variables simultaneously meet specified conditions that define the event. For example, a boiler overheating may be an event that is defined to have occurred only when the temperature variable is above a specified value and the boiler status is at "react" at the same time. However, a user has no way of determining when this occurred other than by manually selecting and viewing different time periods of data on the trend display in order to find when both temperature and boiler status simultaneously met their respective specified overheat conditions.

Since it is a common task to analyse past data to determine specific occurrences of significant events that may indicate problems or other issues of the plant, there is thus a need to alleviate the laborious trial-and-error searching through past data to determine when events occurred during operations of the plant.

### Summary of the Invention

According to a first exemplary aspect, there is provided a method of determining when an event occurred in an industrial plant, the event being defined by a number of variables simultaneously meeting each of their respective event-specific conditions, each of the number of variables having a plurality of data entries stored in a data historian in a server, each data entry comprising a value of the each of the number of variables and a time at which the value was obtained from the industrial plant, the method comprising a user creating an event definition on a client machine by defining the respective event-specific conditions for the number of variables; the user assigning an event label to the event definition; an executable application module in the server tagging with the event label those of the plurality of data entries in the data historian in which the number of variables simultaneously met their respective event-specific conditions to indicate occurrence of the event; and the executable application module further creating an event occurrence list containing times corresponding to those of the plurality of data entries that have been tagged with the event label, each occurrence entry in the event occurrence list including a time of occurrence of the event and the event label.

The method may further comprise (e) displaying in a time browser on the client machine at least one time of occurrence of the event and the event label from the event occurrence list.

The method may further comprise (f) the user selecting the event label displayed in the time browser for display of a graph on the client machine, the graph comprising values of the number of variables over time during occurrence of the event.

Creating the event definition may comprise writing a conditional statement involving the number of variables and the event label on the client machine. The conditional statement may comprise an IF clause and a THEN clause, and the IF clause may comprise a specified curve shape of a trend chart associated with the each of the number of variables.

Alternatively, creating the event definition may comprise creating a flow chart involving the number of variables and the event label in a flow chart editor on the computer terminal.

The method may further comprise repeating steps (a) to (d) a plurality of times for a corresponding plurality of events, thereby creating a plurality of event definitions with a corresponding plurality of event labels so that in steps (d) and (e), the event may comprise each of the plurality of events and the event label may comprise each of the plurality of labels.

Those of the plurality of data entries tagged with the event label may be within a user-specified time period.

The method may further comprise assigning a data condition identity to the event definition in step (b), tagging with the data condition identity those of the plurality of data entries that have been tagged with the event label, and each occurrence entry further may comprise the data condition identity.

The method may further comprise importing an event recorded in another system into the event occurrence list as an imported event, and an occurrence entry of the imported event may include a time of occurrence and an event label of the imported event.

According to a second exemplary aspect, there is provided an apparatus for determining when an event occurred in an industrial plant, the event being defined by a number of variables simultaneously meeting each of their respective event-specific conditions, the apparatus comprising a data historian in a server configured to store a plurality of data entries for each of the number of variables, each data entry comprising a value of the each of the number of variables and a time at which the value was obtained from the industrial plant; an event definition editor provided on a client machine and configured to allow a user to create an event definition by defining the respective event-specific conditions for the number of variables and configured to allow the user to assign an event label to the event definition; an executable application module in the server configured to tag with the event label those of the plurality of data entries in the data historian in which the number of variables simultaneously met their respective event-specific conditions to indicate occurrence of the event, the executable application module further configured to create an event occurrence list containing times corresponding to those of the plurality of data entries that have been tagged with the event label, each occurrence entry in the event occurrence list including a time of occurrence of the event and the event label.

The apparatus may further comprise a time browser configured to display on the client machine at least one time of occurrence of the event and the event label from the event occurrence list.

The time browser may be further configured to allow selection of the event label displayed in the time browser to display a graph of values of the number of variables over time during occurrence of the event on a trend display on the client machine.

The event definition editor may be further configured to allow writing of a conditional statement involving the number of variables and the event label for creating the event definition.

The conditional statement may comprise an IF clause and a THEN clause, and the IF clause may comprise a specified curve shape of a trend chart associated with the each of the number of variables.

The apparatus may further comprise a flow chart editor provided on the client machine and configured to allow creation of a flow chart involving the number of variables and the event label for creating the event definition.

Those of the plurality of data entries tagged with the event label may be within a user-specified time period.

The event definition editor may be further configured to allow the user to assign a data condition identity to the event definition, and the executable application module may be further configured to tag with the data condition identity those of the plurality of data entries that have been tagged with the event label, and each occurrence entry may further comprise the data condition identity.

The apparatus may further comprise a label editor configured to allow the user to manually label an event on the trend display.

The apparatus may be configured to allow an event recorded in another system to be imported into the event occurrence list as an imported event, and an occurrence entry of the imported event may include a time of occurrence and an event label of the imported event.

### Brief Description of the Drawings

In order that the invention may be fully understood and readily put into practical effect there shall now be described by way of non-limitative example only exemplary embodiments of the present invention, the description being with reference to the accompanying illustrative drawings.

In the drawings:
- FIG. 1: is a schematic diagram of data stored in a data historian;
- FIG. 2: is a schematic illustration of a data browser;
- FIG. 3: is a schematic architectural diagram of an apparatus.
- FIG. 4: is a schematic illustration of conditional statements written with a data editor;
- FIGS. 5a and 5b: are schematic illustration of exemplary time browsers;
- FIG. 6: is a schematic illustration of conditional statements comprising specified curve shapes;
- FIG. 7: is a schematic illustration of a flow chart created to define specified conditions for a number of variables;
- FIG. 8: is a schematic illustration of an event occurrence list comprising occurrence entries of imported events; and
- FIG. 9: is a flowchart of a method for determining when an event occurred in an industrial plant.

### Detailed Description of the Exemplary Embodiments

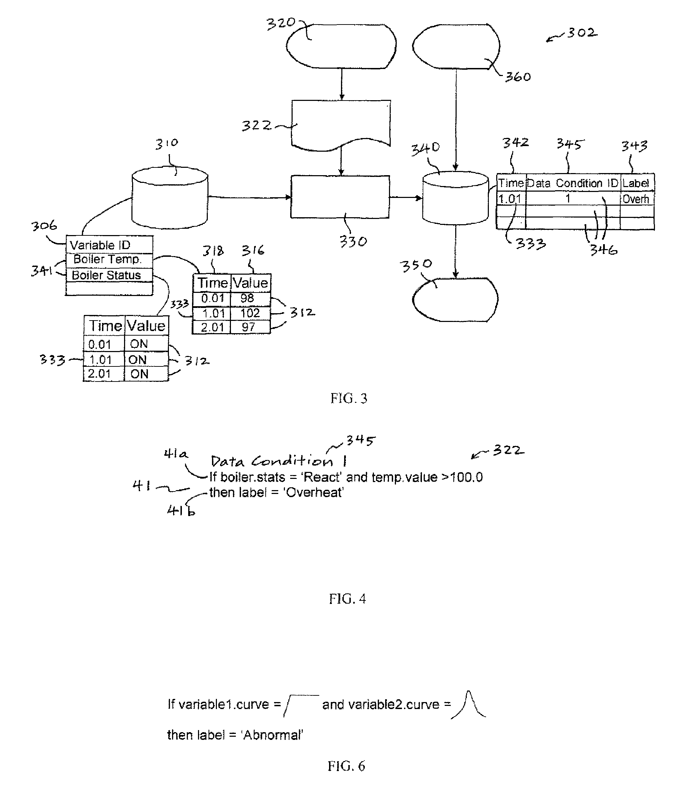

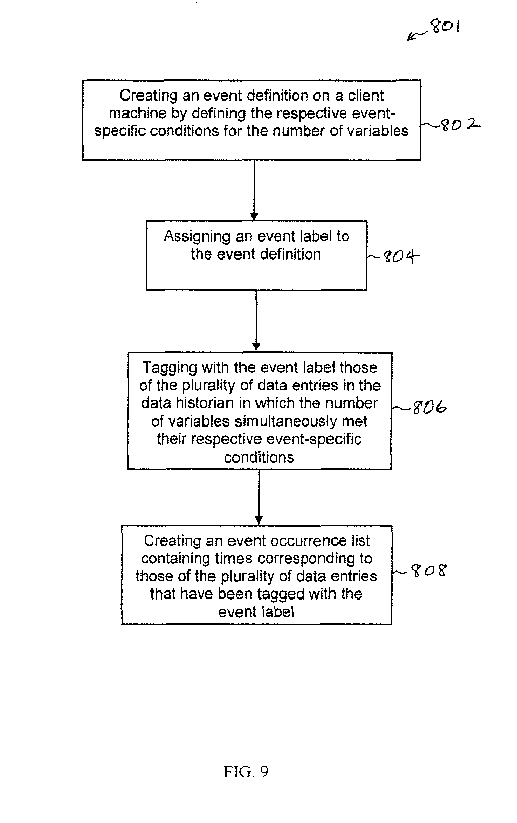

An exemplary method 801 and apparatus 302 for determining when an event occurred in an industrial plant will be described with reference to FIGS. 3 to 9.

In the present invention, an event that is considered to have occurred in the industrial plant is defined by a number of variables simultaneously meeting each of their respective event-specific conditions. To use an example that will be repeatedly referred to below, an event may be a boiler overheating. In this example, the event is defmed by two variables, one being temperature, and the other being the boiler status, whether ON or OFF. The boiler is considered to be overheating when the temperature is over 100°C while the boiler is ON. Thus, the event-specific condition of the temperature variable is the temperature being over 100°C and the event-specific condition of the boiler status variable is the boiler being ON. When both the temperature variable and the boiler status variable simultaneously meet their event-specific conditions, the event of the boiler overheating is thus considered to have occurred.

It will be appreciated that the variables associated with any event can have values being in any form, such as data strings or numerical values. Furthermore, a number of variables simultaneously meeting each of their respective event-specific conditions can mean the conditions being met at a specific time instant or over a time period.

As shown in FIG. 3, the apparatus 302 for determining when an event defined by a number of variables 306 simultaneously meeting each of their respective event-specific conditions comprises a data historian 310 in a server (not shown) configured to store a plurality of data entries 312 for each of the number of variables 314. For each of the number of variables 314, each data entry 312 comprises a value 316 and a time 318 at which the value was obtained from the industrial plant.

The apparatus 302 also comprises an event definition editor 320. The event definition editor 320 is typically provided on a client machine (not shown). Using the event definition editor 320, a user creates an event definition 322 by defining the respective event-specific conditions for the number of variables 306, 802. Creating the event definition 322 typically comprises writing a conditional statement involving the number of variables 306 and an event label 343 on the client machine.

As shown in FIG. 4, continuing with the boiler overheating example begun above, the event definition 322 comprises a conditional statement 41 involving the boiler status and the boiler temperature. The conditional statement 41 typically contains an IF clause 41 a and a THEN clause 4 1 b. Appreciably, the event-specific conditions for the number of variables 306 are reflected in the IF clause 41 a. The event definition 322 also includes the event label 343 assigned by the user to the event definition 322, 804. The event label 343 is reflected in the THEN clause 41b of the conditional statement 41. The event definition 322 is typically stored on the server.

The apparatus 302 also comprises an executable application module 330 in the server. Provided with the event definition 322, the executable application module 330, when run, automatically tags with the event label 343 those of the plurality of data entries 312 in the data historian 310 in which the number of variables 306 simultaneously met their respective event-specific conditions to indicate occurrence of the event 806. To do this, the executable application module 330 searches through the plurality of data entries 312 in the data historian to find specific times in which all the number of variables simultaneously met their event-specific conditions. Continuing with the example begun above, one of the above-mentioned specific times would include time instance 333 as shown in FIG. 3 at time 1.01hr when the boiler status was at ON and the temperature was also over 102°C.

Subsequently, the executable application module 330 automatically creates an event occurrence list 340 containing the times corresponding to those of the plurality of data entries that have been tagged with the event label 343, 808. Time instance 333 would be listed in the event occurrence list 340. Each occurrence entry 346 in the event occurrence list 340 typically includes a time of occurrence 342 of the event and the event label 343.

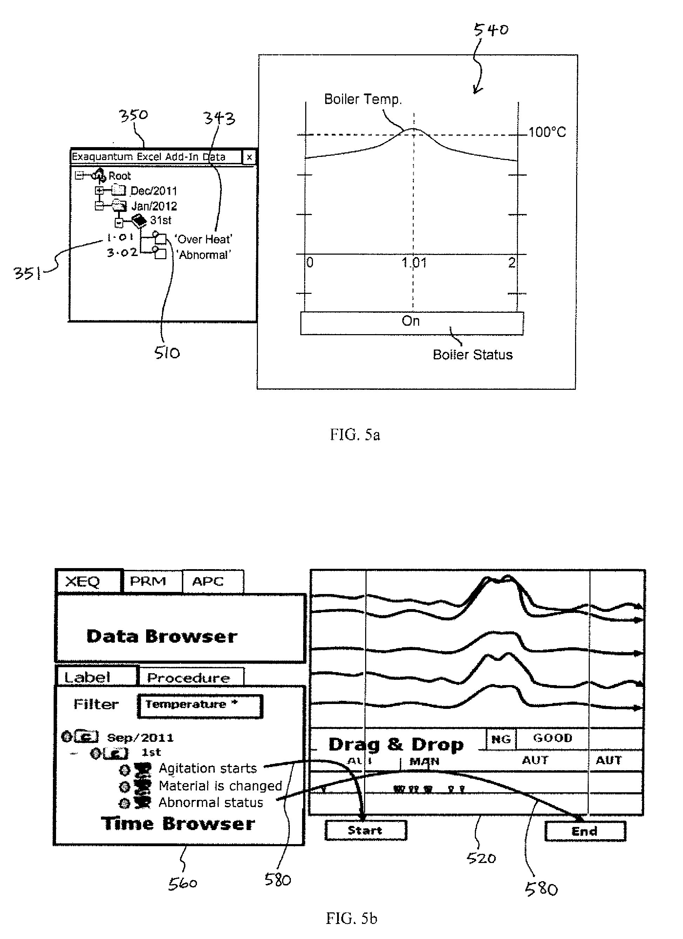

The apparatus 302 preferably also includes a time browser 350. As shown in FIG. 5a, a first exemplary time browser 350 displays on the client machine at least one time of occurrence 351 of the event and the event label 343. Preferably, a user can select the event label 343 displayed in the time browser 350 to display a graph 540 of values of the number of variables defining the event over time during occurrence of the event. To do this, the time browser preferably allows an icon 510 representing an occurrence of the event to be dragged by the user using an input device such as a mouse pointer to a trend display 520 for visual representation as the graph 540.

Preferably, as shown in FIG. 5b, the time browser 560 is also configured to allow a user to specify a period of time to be displayed on the trend display 520 by dragging selected events from the time browser 560 to the trend display 520 as indicated by arrows 580, and to do so without changing which variables are shown on the trend display 520. In this way, the trend display 520 can show not only the variables defining the event, but also show whichever variables a user is interested to see within the specified period of time selected by the user.

In an alternative embodiment, creating the event definition 322 may comprise writing a conditional statement as shown in FIG. 6 wherein the IF clause comprises a specified curve shape of a trend chart associated with the each of the number of variables. In this embodiment, the event label is assigned to define the event in the THEN clause when a trend chart of at least one variable meets a specified curve shape. In the illustration of FIG. 6, two variables need to simultaneously meet their specified curve shapes for the event label to be assigned to such an occurrence.

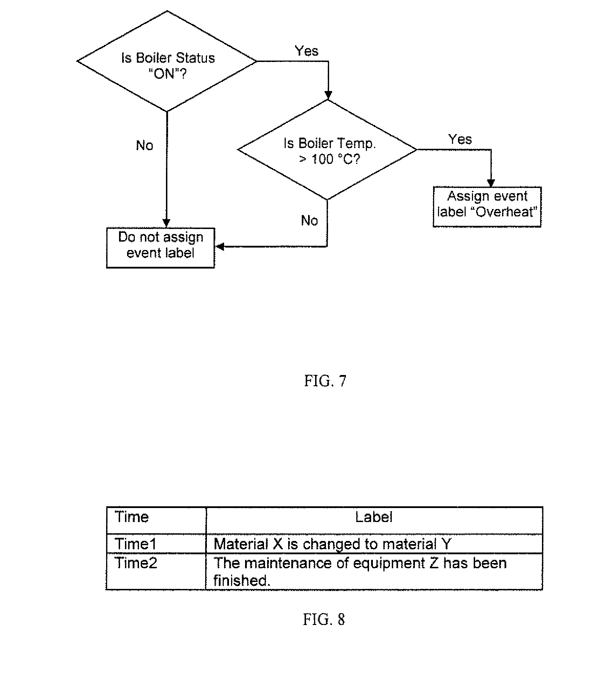

In a further alternative embodiment, creating the event definition 322 may comprise using a flow chart editor provided on the client machine to create a flow chart relating to the number of variables and the event label as shown in FIG. 7.

As it is envisaged that the plurality of data entries 312 in the data historian 310 may be data entries obtained from a substantial span of time of operations of the industrial plant, the apparatus 302 is preferably configured to allow the user to specify a time period such that the executable application module only searches through the plurality of data entries 312 within the user-specified time period in the data historian to find specific times in which all the number of variables simultaneously met their event-specific conditions. In this way, those of the plurality of data entries tagged with the event label are within the user-specified time period.

Preferably, the event definition editor 320 also allows the user to assign a data condition identity 345 to the event definition 322. Together with the event label 343, the data condition identity 345 may be tagged to those of the plurality of data entries that have been tagged with the event label 343. Accordingly, each occurrence entry 346 further comprises the data condition identity 345 as shown in FIG 3. In this way, it is possible to view the event occurrence list and know what event occurred at any one of the listed times shown by looking up the data condition identity 345 for the event definition 322.

The apparatus 302 may further comprise a label editor 360 to allow the user to manually tag an event label to an event on the trend display.

In addition, the apparatus 302 may also be configured to allow events that have been recorded in another system as having occurred to be imported into the event occurrence list 340, such events being referred to as imported events. Each imported event is accordingly shown as an occurrence entry 346 having a time of occurrence of the imported event 342 and an event label 343 in the event occurrence list 340. For example, such events may comprise execution of equipment maintenance, or a change in a material used in a specific plant process. Imported events would typically be events that cannot be generated from data found in the data historian 310. In this way, it is possible to have a more comprehensive understanding of what has happened in the plant. FIG. 8 shows an exemplary event occurrence list 340 comprising occurrence entries of imported events.

Although the method 801 and apparatus 302 have been described above for determining the occurrence of one event, it will be appreciated that they are readily extended to determining the occurrence of a plurality of events by repetition of the appropriate steps of the method 801 and applying them to a plurality of events.

Thus, provided with the method 801 and apparatus 302, a user can readily determine when an event occurred without having to manually select by trial and error the time periods for viewing in order to check on the values of the variables that define the event. With the present invention, events are automatically identified and captured in the event occurrence list 340. Identified events can be readily viewed on the trend display by appropriate selection of the desired identified event for viewing. The present invention thus alleviates the laborious trial-and-error searching through past data to determine when events occurred during operations of the plant. With the present invention, users can now quickly identify and view specific occurrences of events that may indicate problems or other issues of the plant.

Whilst there has been described in the foregoing description exemplary embodiments of the present invention, it will be understood by those skilled in the technology concerned that many variations in details of design, construction and/or operation may be made without departing from the present invention.

## Claims

1. A method of determining when an event occurred in an industrial plant, the event being defined by a number of variables simultaneously meeting each of their respective event-specific conditions, each of the number of variables having a plurality of data entries stored in a data historian in a server, each data entry comprising a value of the each of the number of variables and a time at which the value was obtained from the industrial plant, the method comprising:
(a) a user creating an event definition on a client machine by defining the respective event-specific conditions for the number of variables;
(b) the user assigning an event label to the event definition;
(c) an executable application module in the server tagging with the event label those of the plurality of data entries in the data historian in which the number of variables simultaneously met their respective event-specific conditions to indicate occurrence of the event; and
(d) the executable application module further creating an event occurrence list containing times corresponding to those of the plurality of data entries that have been tagged with the event label, each occurrence entry in the event occurrence list including a time of occurrence of the event and the event label.

2. The method of claim 1, further comprising:
(e) displaying in a time browser on the client machine at least one time of occurrence of the event and the event label from the event occurrence list.

3. The method of claim 2, further comprising:
(f) the user selecting the event label displayed in the time browser for display of a graph on the client machine, the graph comprising values of the number of variables over time during occurrence of the event.

4. The method of any preceding claim, wherein creating the event definition comprises writing a conditional statement involving the number of variables and the event label on the client machine.

5. The method of claim 4, wherein the conditional statement comprises an IF clause and a THEN clause, and wherein the IF clause comprises a specified curve shape of a trend chart associated with the each of the number of variables.

6. The method of any preceding claim, wherein creating the event definition comprises creating a flow chart involving the number of variables and the event label in a flow chart editor on the computer terminal.

7. The method of claim 2 or any one of claims 3 to 6 when dependent on claim 2, further comprising repeating steps (a) to (d) a plurality of times for a corresponding plurality of events, thereby creating a plurality of event definitions with a corresponding plurality of event labels so that in steps (d) and (e), the event comprises each of the plurality of events and the event label comprises each of the plurality of labels.

8. The method of any preceding claim, wherein those of the plurality of data entries tagged with the event label are within a user-specified time period.

9. The method of any preceding claim, further comprising assigning a data condition identity to the event definition in step (b), tagging with the data condition identity those of the plurality of data entries that have been tagged with the event label, and wherein each occurrence entry further comprises the data condition identity.

10. The method of any preceding claim, further comprising importing an event recorded in another system into the event occurrence list as an imported event, and wherein an occurrence entry of the imported event includes a time of occurrence and an event label of the imported event.

11. An apparatus for determining when an event occurred in an industrial plant, the event being defined by a number of variables simultaneously meeting each of their respective event-specific conditions, the apparatus comprising:
a data historian in a server configured to store a plurality of data entries for each of the number of variables, each data entry comprising a value of the each of the number of variables and a time at which the value was obtained from the industrial plant;
an event definition editor provided on a client machine and configured to allow a user to create an event definition by defining the respective event-specific conditions for the number of variables and configured to allow the user to assign an event label to the event definition;
an executable application module in the server configured to tag with the event label those of the plurality of data entries in the data historian in which the number of variables simultaneously met their respective event-specific conditions to indicate occurrence of the event, the executable application module further configured to create an event occurrence list containing times corresponding to those of the plurality of data entries that have been tagged with the event label, each occurrence entry in the event occurrence list including a time of occurrence of the event and the event label.

12. The apparatus of claim 11, further comprising a time browser configured to display on the client machine at least one time of occurrence of the event and the event label from the event occurrence list.

13. The apparatus of claim 11 or claim 12, wherein the time browser is further configured to allow selection of the event label displayed in the time browser to display a graph of values of the number of variables over time during occurrence of the event on a trend display on the client machine, and/or wherein the event definition editor is further configured to allow writing of a conditional statement involving the number of variables and the event label for creating the event definition, and/or further comprising a flow chart editor provided on the client machine and configured to allow creation of a flow chart involving the number of variables and the event label for creating the event definition, and/or wherein those of the plurality of data entries tagged with the event label are within a user-specified time period, and/or wherein the event definition editor is further configured to allow the user to assign a data condition identity to the event definition, wherein the executable application module is further configured to tag with the data condition identity those of the plurality of data entries that have been tagged with the event label, and wherein each occurrence entry further comprises the data condition identity, and/or wherein the apparatus is configured to allow an event recorded in another system to be imported into the event occurrence list as an imported event, and wherein an occurrence entry of the imported event includes a time of occurrence and an event label of the imported event.

14. The apparatus of claim 13, wherein the conditional statement comprises an IF clause and a THEN clause, and wherein the IF clause comprises a specified curve shape of a trend chart associated with the each of the number of variables.

15. The apparatus of claim 13, further comprising a label editor configured to allow the user to manually label an event on the trend display.
